# EUROPEAN PATENT SPECIFICATION

(11) **EP 2 013 301 B1**
(45) Date of publication and mention of the grant of the patent: **23.03.2011**
(21) Application number: 07776783.8
(22) Date of filing: 04.05.2007
(51) Int. Cl.: C09D 101/10, C09D 5/00

(54) **HYDROPHILIC FOULING-RELEASE COATINGS AND USES THEREOF**
HYDROPHILE UND FÄULNISABWEISENDE BESCHICHTUNGEN SOWIE ANWENDUNGEN DAVON
REVÊTEMENTS ANTI-SALISSURES HYDROPHILES ET LEURS UTILISATIONS

(30) Priority: 04.05.2006 US 746423 P; 02.05.2007 US 799522
(43) Date of publication of application: 14.01.2009
(73) Proprietor: EASTMAN CHEMICAL COMPANY, Kingsport TN 37660 (US)
(72) Inventor: HAMILTON, Willard Charlson, Wilmington, NC 28409 (US); FURMAN, Myron, c/o Eastman Chemical Company, Kingsport, TN 37660-5075 (US)
(74) Representative: Wibbelmann, Jobst
(86) International application number: PCT/US2007/010910
(87) International publication number: WO 2007/130618

(56) References cited:
- GB-A- 948 258
- GB-A- 2 337 950
- US-A- 2 486 012
- US-A- 4 497 852
- US-A- 4 908 061

## Description

### BACKGROUND OF THE INVENTION

The present invention relates to a process for reducing biological fouling in marine applications without the use of toxic anti-fouling agents. Further, the invention describes water-insoluble hydrophilic coating compositions which are particularly useful in that respect.

Marine fouling organisms - such as barnacles, mussels, and even algae - attach, grow, and accumulate on surfaces in an underwater environment. The accumulation of these organisms on man-made structures such as the hulls of ships, water-intake pipes, buoys, and stationary off-shore platforms can result in significant reductions in the performance and/or the durability of the structures in question. Such reductions are often accompanied by significant economic consequences. For example, the increased drag created by fouling organisms attached to the surface of a sea-going vessel results in significant reductions in speed due to increase drag created by the organisms. As transportation schedules must be maintained, the consequence of marine fouling is that greater amounts of fuel are consumed in order to maintain appropriate speeds, and operating costs rise. In order to remove the fouling, the ship must be dry-docked, the fouling removed, and the vessel re-coated. Not only is there a direct cost to the ship operator associated with this maintenance process, but there is also an indirect cost to associated with the revenue lost during the time period ship is out of service. In the more static example of water-intake pipes, fouling organisms such as zebra mussels can significantly reduce flow rates within the pipes. This can result in consequences ranging from an inconvenient loss of pressure in a municipal water treatment facility to a costly and potentially catastrophic loss of cooling water in a thermoelectric power plant or petrochemical factory.

Historically, the control of fouling by marine organisms has been accomplished through the use of chemicals which are toxic to the fouling organism or to groups of such organisms through so called biocidal anti-fouling coatings. It is necessary for such biocidal materials to have broad spectrum activity over various types of fouling organisms due to the different waters and climactic conditions to which the ship - and consequently its coating - will be exposed. Such chemical agents have included oxides, salts, and organo-esters of metals such as copper, tin, zinc, and lead as well as organic compounds such as 10,10-oxybisphenoxazine, hexachlorophene , and tetrachloroisophthalonitrile. When incorporated into coatings for aquatic structures, these and other similar materials can effectively reduce the biofouling on the coated surface. However, such materials often leach out of the coating composition with significant negative consequences. Due to the aforementioned broad spectrum toxicity of these materials, there are naturally the concerns that such substances when leached from these types of coatings can accumulate in the environment and negatively impact desirable forms of marine life. There is also, however, the practical consequence of the loss of effectiveness of the coating against fouling organisms with time. This typically occurs as the concentration of anti-fouling chemical in the coating is reduced to below the effective level.

One method of addressing the loss of effectiveness of the biocidal anti-fouling coating is through a method of controlled ablation of the coating. In this process, the surface of the coating film gradually becomes soluble in (sea)water such that new surface is exposed which has not been depleted of the chemical anti-foulant. So-called controlled depletion or self-polishing coating systems must be very carefully formulated in order to carefully balance the need for a controlled release of the chemical anti-foulant with the need for a durable protective coating.

U.S. Pat. No. 4,273,833 discloses crosslinked hydrophilic coating which is applied over a hard-surface leaching-type anti-fouling paint in order to provide prolonged anti-fouling activity. The crosslinked hydrophilic coating is comprised of a water-soluble or water-dispersible carboxylated acrylic polymer, a crosslinking agent for the carboxylated acrylic polymer, a higher polyalkylene-polyamine (or derivative thereof), and a UV-absorbing agent. An increase in the useful life of the coating system on a watercraft or underwater structure is also disclosed.

U.S. Pat. No. 4,497,852 discloses an anti-fouling paint composition which is hydrophobic, optically clear, and non-leaching for application to marine structures. The composition is prepared as a single component composition by mixing a polyol-reactive isocyanate, a hydroxy-functional acrylic polymer, and an organotin polymer in a medium comprising a mixture of low molecular weight ketones and hydroxy-functional ether or linear alcohol compounds. It is preferred that the organotin polymer comprise from 40-60 wt% of the total coating composition.

U.S. Pat. No. 4,576,838 discloses an anti-fouling paint composition with good resistance to leaching and consequently long life which is comprised of a tin-containing polymer derived from a monomer having the formula R₃SnOOCR', a hydrophilic component, and a hydrophobic component. The hydrophilic component is disclosed as aiding in the adherence of the composition to the material on which it is applied, whereas the hydrophobic component aids in making the composition retardant to the solvent effect of water or in other words, less leachable.

U.S. Pat. No. 5,302,192 discloses an anti-fouling coating composition that comprises a marine biocide and a binder which is a hydrolyzable film-forming seawater-eroding polymer wherein the polymer contains sulphonic acid groups in quaternary ammonium salt form. Cuprous oxide is disclosed as the marine biocidal pigment.

A more environmentally-friendly alternative to the biocidal anti-fouling coatings is that of so-called foul release coatings. Such materials do not use biocides to control fouling but rather rely on a "non-stick" principle to minimize the adhesion of fouling organisms to the surface.
In such a system, it is ideal for bioadhesion to the surface to be weak enough that the weight of the foulant and/or the hydrodynamic forces created by the ship's motion would be sufficient to dislodge the marine organisms. It is generally accepted that potential physical, chemical, and mechanical interactions of the fouling adhesive with the substrate must be minimized. Current art suggest that physical adherence of the fouling adhesive is minimized when a coating composition has a very low surface energy (i.e. be very hydrophobic). Such bioadhesives are typically polypeptides or polysaccharides and are very polar in nature. Brady et.al. (Langmuir 2004, 20, 2830-2836) in fact state that the release property of a material (as used in a foul release coating) is primarily controlled by its surface free energy of the type that gives rise to water repellency - that is, by how hydrophobic the material is. Chemical interactions are minimized by ensuring that the coating composition does not contain functional groups which could covalently react with the constituents of the fouling adhesive. For example, polypeptide-based adhesives would be expected to react with carboxylic acid and/or amine functionalities within the coating as they are chemically very similar to the reactive groups which form the adhesive. Mechanical interactions are minimized through the creation of a very smooth, defect-free surface. Surface roughness or porosity - even at a microscopic level - can be sufficient for fouling organisms to mechanical bond to a marine coating.

U.S. Pat. No. 4,025,693 discloses a coating composition for a marine surface comprising a mixture of silicone oil and cold-cured silicone rubber. Said coating composition is further disclosed as having an anti-fouling effect. The silicone rubber-silicone oil coating may be the only anti-fouling coating on the marine surface or it may be a topcoating on top of a standard coating of an anti-fouling composition containing a toxic compound - for example, a toxic organometallic compound.

U.S. Pat. No. 5,218,059 discloses a non-toxic anti-fouling coating comprising a reaction-curable silicone resin and an alkoxy group-containing silicone resin incapable of reacting with the reaction-curable silicone resin. The anti-fouling characteristics of the coating are enhanced by the exudation of the alkoxy group-containing silicone resin to the surface of the coating. The alkoxy modification of the silicone resin provides improved control over the rate of exudation of the resin to the coating surface. This exuded layer results in breaking the base to which the biofouling organism(s) is attached - thereby yielding good anti-fouling properties.

U.S. Pat. No. 6,265,515 discloses a fluorinated silicone resin composition which is capable of providing exceptionally low surface energies (as low as 10 dynes/cm) and its use as a foul release coating. It further discloses that very non-polar (i.e. hydrophobic) surfaces are necessary for foul release coatings because polar (i.e. hydrophilic) surfaces will provide for facile attachment of marine organisms through hydrogen bonding between the polar biopolymer adhesive and the surface.

U.S. Pat. Pub. No. 2003/0113547 discloses a method for reducing marine fouling comprising the application of a fluorinated polyurethane elastomer to a substrate. The fluorinated polyurethane elastomer is disclosed as the reaction product of a polyfunctional isocyanate, a polyol, and a fluorinated polyol. The polyurethane elastomers demonstrated by the invention have surface energies of less than 30 dynes/cm.

While, as described above, polar or hydrophilic coatings are generally not considered to have the characteristics which would offer acceptable foul release performance, such coating systems have been shown to exhibit a drag-reducing or lubricating effect in aqueous environments.

U.S. Pat. No. 3,990,381 discloses hydrophilic drag-reducing coatings for surfaces moving through water or surfaces against which water is flowing. It is further disclosed that conventional organic or inorganic anti-foulants such as those previously described are a necessary component of the anti-fouling coating composition of the invention.

U.S. Pat. No 7,008,979 discloses a hydrophilic, lubricious organic coating with good adhesion and durability which exhibits a significantly reduce coefficient of friction when exposed to water or aqueous solutions. The coating composition is comprised of a waterborne polyurethane, a water-soluble polymer or copolymer derived from N-vinyl pyrrolidone, an aqueous colloidal metal oxide, and a crosslinker. Coating compositions further comprising biocides, pesticides, anti-fouling agents, and algicides are also disclosed.

### BRIEF SUMMARY OF THE INVENTION

The present invention pertains to a process for inhibiting fouling on an underwater surface comprising applying to the surface a coating composition comprising: (a)one or more cellulose esters selected from the group consisting of cellulose acetate, cellulose triacetate, cellulose acetate phthalate, cellulose acetate butyrate, cellulose butyrate, cellulose tributyrate, cellulose propionate, cellulose tripropionate, cellulose acetate propionate, carboxymethylcellulose acetate, carboxymethylcellulose acetate propionate, carboxymethylcellulose acetate butyrate, cellulose acetate butyrate succinate, or mixtures thereof; wherein the cellulose ester (s) comprise from 10% to 70% by weigh based on the total weight of the composition; (b) one or more organic solvents selected from the group comprising alcohols, esters, ketones, glycol ethers, or glycol ether esters , or mixtures thereof; and (c) a crosslinking agent Which is reactive with of least one of said cellulose esters and curing said coating composition to provide a water-insoluble hydrophilic coating that is substantially smooth and non-porous.

The cellulose ester of the coating composition reacts with a crosslinker to provide improved toughness for use as a coating on a subtrate that is submerged in water.

A further aspect of the invention pertains to the application of the coating composition comprising (a), (b) and (c) to a substrate to be subjected to a marine environment. In a further aspect, the coating composition is applied as a clearcoat to a previously coated substrate.

### DETAILED DESCRIPTION OF THE INVENTION

The present invention may be understood more readily by reference to the following detailed description of the invention, and to the Examples included therein.

Before the present compositions of matter and methods are disclosed and described, it is to be understood that this invention is not limited to specific synthetic methods or to particular formulations, unless otherwise indicated, and, as such, may vary from the disclosure. It is also to be understood that the terminology used is for the purpose of describing particular embodiments only, and is not intended to limit the scope of the invention.

The singular forms "a," "an," and "the" include plural referents, unless the context clearly dictates otherwise.

Optional or optionally means that the subsequently described event or circumstances may or may not occur. The description includes instances where the event or circumstance occurs, and instances where it does not occur.

Ranges may be expressed herein as from about one particular value, and/or to about another particular value. When such a range is expressed, it is to be understood that another embodiment is from the one particular value and/or to the other particular value.

Where patents or publications are referenced, the disclosures of these references in their entireties are intended to be incorporated by reference, in order to more fully describe the state of the art to which the invention pertains.

In order for a marine organism to adhere to (i.e. foul) a surface, the bioadhesive employed by the organism must physically adsorb onto that surface. It is widely held that this is related to the ability of the bioadhesive to adequately wet the surface in question. As such, many non-toxic foul release coatings such as those previously described are based on very hydrophobic materials such as fluorinated polymers, polysiloxanes, and combinations thereof. These provide substrates which are difficult to wet for both water and the typically polar bioadhesives. However, a critical component that is often overlooked in the attachment of fouling organisms to a marine surface is that the bioadhesive must not only wet the surface, but it must also displace the water which is associated with the surface in order to effectively adhere. In the case of very hydrophobic surface coatings, there is essentially no interaction between the water of the marine environment and the coating film as evidenced by the very low surface energies typically quoted for such materials. The present invention describes a very hydrophilic coating to which the water of the marine environment is so tightly bound that the biological adhesive cannot effectively displace it from the surface of the coating film. As such, the adhesion via physical adsorption of the fouling organism to the substrate is very weak. However, the hydrophilic coating of the invention is necessarily water-insoluble or easily rendered as such in order to prevent its complete dissolution and/or delamination from the substrate to be protected.

One aspect of the present invention relates to a process for inhibiting the biological fouling of an underwater surface. This process involves applying onto a substrate that is to be submerged in water a coating composition and curing the coating composition to yield a water-insoluble hydrophilic coating wherein the coating composition comprises: at least one cellulose ester; and at least one organic solvent.

Cellulose esters provide for coatings with a unique balance of hydrophilicity, which provides for weak fouling adhesion, and durability, which provides for film integrity in a marine environment. Typically, cellulose esters result from the reaction of cellulose (e.g. from wood pulp) with various carboxylic acid anhydrides. In one embodiment, the cellulose esters useful in the water-insoluble hydrophilic coating composition of the invention are prepared from the reaction of cellulose with a carboxylic acid anhydride or a mixture of carboxylic acid anhydrides in which the anhydride(s) contain four carbons or less. Such a limitation is necessary in order for the water-insoluble coating of the invention to be sufficiently hydrophilic to minimize physical adsorption of biofouling adhesives.

Suitably, any cellulose ester may be used in the coating compositions according to the present invention. For example, cellulose esters comprise C₁-C₂₀ esters of cellulose, or C₂-C₂₀ esters of cellulose, or C₂-C₁₀ esters of cellulose, or even C₂ to C₄ esters of cellulose. Secondary and tertiary cellulose esters suitably may also be used. For example, suitable cellulose esters according to the present invention may be selected from the group consisting of cellulose acetate, cellulose triacetate, cellulose acetate phthalate, cellulose acetate butyrate, cellulose butyrate, cellulose tributyrate, cellulose propionate, cellulose tripropionate, cellulose acetate propionate, carboxymethylcellulose acetate, carboxymethylcellulose acetate propionate, carboxymethylcellulose acetate butyrate, cellulose acetate butyrate succinate, or mixtures thereof.

Suitably, in one embodiment of the present invention, the cellulose esters may be selected from a group consisting of cellulose acetates, cellulose butyrates, cellulose propionates, cellulose triacetates, cellulose acetate propionates, cellulose acetate butyrates, cellulose acetate phthalates, or mixtures thereof.

In another embodiment, the cellulose esters are substantially devoid of functional groups which are reactive with marine bioadhesives. Generally, without being bound by any theory, hydroxyl groups are not reactive with bioadhesives. As such, in this embodiment, any cellulose esters which are substantially free of carboxyl groups or amine groups would be suitable for use. For example, in these embodiments, the cellulose esters may be selected from a group consisting of cellulose acetates, cellulose butyrates, cellulose propionates, cellulose triacetates, cellulose acetate propionates, or cellulose acetate butyrates, or mixtures thereof.

In yet another embodiment, the cellulose ester(s) comprise from 10% to 70% by weight based on the total weight of the composition, such as, for example from 15% to 60% or from 20 to 50%.

In a further embodiment of the present invention, the cellulose esters may be partially hydrolyzed. The hydroxyl groups which result from this partial hydrolysis further increase the hydrophilicity of the water-insoluble hydrophilic coating and result in improved foul release characteristics of the coating. In one embodiment, the degree of ester substitution on the partially hydrolyzed cellulose ester may be in the range of from 1.0 to 2.95 based on a theoretical maximum degree of substitution of 3.0 for complete esterification of cellulose with carboxylic acid anhydride(s). For example, in one embodiment, the cellulose ester is a cellulose acetate with a degree of substitution of acetyl of from 1.0 to 2.0, such as, from 1.6 to 1.8. In another embodiment, the cellulose ester is a cellulose acetate propionate with degree of substitution of acetyl of from 0.1 to 2.1, and a degree of substitution of propionyl of from 0.5 to 2.5. In another embodiment, the cellulose ester is a cellulose acetate butyrate with degree of substitution of acetyl of from 0.3 to 2.1, and a degree of substitution of butyryl of from 0.75 to 2.6.

It is further necessary for the coating composition of the invention to provide for a substantially smooth and non-porous surface of the water-insoluble hydrophilic coating. This is necessary in order to minimize mechanical adhesion of biofouling organisms which can occur on rough and/or defect-ridden surfaces.

Furthermore, according to the present invention, the smoothness of the coating composition may be measured using any conventional method. For example, Average Hull Roughness (AHR) can be used to measure the smoothness of the inventive compositions. Typically, if the hull roughness is allowed to increase, then more power is required to push the vessel through the water. Thus, low AHR values reflect smooth and efficient surfaces. AHR is measured as the average maximum peak to the lowest trough height. In some instances, the performance of foul release compositions may be a function of AHR and wavelength. For example, higher AHR and shorter wavelength may indicate a coating with a more closed texture, and lower AHR with a longer wavelength may indicate a coating with a more open texture. Thus, the coatings that provide the longest wavelength and the lowest AHR may indicate smooth substrate surfaces. As such, substrates with dried or cured coating composition may be expected to have an average hull roughnesses of 500 microns or less, such as, 200 microns or less, or 150 microns or less, or 100 microns or less, or even 50 microns or less, according to the present invention. Additionally, the surface smoothness of the coated substrate can also be measure using root means square or RMS roughness as determined by characterization methods such as atomic force microscopy which provides a reasonable measure of surface smoothness. A lower value for RMS roughness is indicative of a smoother surface.

Suitably, any organic solvent would be suitable for use according to the present invention. However, for solvent-borne coatings of the type described herein, the quality of the coating surface is significantly impacted by the choice of the solvent component(s) of the coating composition. The evaporation rate of the solvent must be sufficiently slow such that the coating composition has the opportunity to flow and level, thereby yielding a water-insoluble hydrophilic coating which is substantially smooth and non-porous. It is also important that the solvent evaporate quickly enough to permit handling and/or return to service of the coated structure in a reasonable amount of time. In one embodiment, solvents selected from the group consisting of alcohols, esters, ketones, glycol ethers, or glycol ether esters are particularly useful. Typically, the solvent may be included in amounts from 30% to 85% by weight based on the total weight of the composition.

In order to obtain an appropriate evaporation rate and to provide for adequate solubility of the cellulose ester component of the coating composition, it is a further embodiment that the coating composition comprise a solvent that is a mixture of at least one primary solvent (a slow-evaporating solvent) and at least one secondary solvent (a fast-evaporating solvent). Primary solvent(s) are characterized by a boiling point at atmospheric pressure of from 130°C to 230°C. Exemplary primary solvents include but are not limited to 2-ethylhexanol, diacetone alcohol, methyl amyl ketone, methyl isoamyl ketone, isobutyl isobutyrate, 2-ethylhexyl acetate, diethylene glycol monobutyl ether, ethylene glycol monobutyl ether, ethylene glycol 2-ethylhexyl ether, diethylene glycol monobutyl ether acetate, ethylene glycol monobutyl ether acetate, or propylene glycol monomethyl ether acetate. Secondary solvent(s) are characterized by a boiling point at atmospheric pressure of from 60°C to 130°C. Exemplary secondary solvents include but are not limited to methanol, ethanol, n-propanol, isopropanol, butanol, acetone, methyl ethyl ketone, methyl propyl ketone, methyl isobutyl ketone, methyl acetate, ethyl acetate, n-propyl acetate, isopropyl acetate, n-butyl acetate, t-butyl acetate, n-propyl propionate, or propylene glycol monomethyl ether. In one embodiment, the primary solvent(s) may be included in amounts from 50% to 90% by weight based on the total weight of the solvent mixture. In a further embodiment the secondary solvent(s) may be included in amounts up to 50% by weight based on the total weight of the solvent mixture.

Typically, cellulose esters have a high glass transition temperature, often greater than 110 °C. As a result, thin films or coatings prepared from them may be hard and often somewhat brittle.
In order to obtain water-insoluble hydrophilic coatings with sufficient flexibility and toughness to be of utility in more aggressive marine applications, it is a further embodiment of the invention that coating composition comprise at least one plasticizer for the cellulose ester. Plasticizers are described in "Handbook of Plasticizers," Ed. Wypych, George, ChemTec Publishing (2004), incorporated by reference herein. A plasticizer useful in the present invention should be compatible with the cellulose ester such that exudation of the plasticizer to the surface of the water-insoluble hydrophilic coating is minimized. This is necessary not only so that the flexibility and consequently the durability of the water-insoluble hydrophilic coating is maintained over the expected lifetime of the coating but also so that the hydrophilic nature of the surface is not compromised by a thin layer of exuded plasticizer. Examples of plasticizers suitable for use in the present invention include, but are not limited to, those selected from the group consisting of dimethyl phthalate, diethyl phthalate, dibutyl phthalate, dioctyl phthalate, diisononyl phthalate, butyl benzyl phthalate, butyl phthalyl butyl glycolate, tris(2-ethyl hexyl) trimellitate, triethyl phosphate, triphenyl phosphate, tricresyl phosphate, p-phenylene bis(diphenyl phosphate), and other phosphate derivatives, diisobutyl adipate, bis(2-ethyl hexyl) adipate, triethyl citrate, acetyl triethyl citrate, plasticizers comprising citric acid (e. g., CitroflexTM plasticizers, available from Morfiex), triacetin, tripropionin, tributyrin, sucrose acetate isobutyrate, glucose penta propionate, triethylene glycol-2-ethylhexanoate, polyethylene glycol, polypropylene glycol, polypropylene glycol dibenzoate, polyethylene glutarate, polyethylene succinate, polyalkyl glycoside, 2,2,4-trimethyl-1,3-pentanediol isobutyrate, diisobutyrate, phthalic acid copolymers, 1,3-butanediol, 1,4-butanediol end-capped by aliphatic epoxide, bis(2-ethyl hexyl) adipate, epoxidized soybean oil, and mixtures thereof. In one embodiment, the plasticizer may be included in amounts up to 25% by weight based on the total weight of the cellulose ester in the composition.

In order to further enhance the durability and resistance characteristics of the water-insoluble hydrophilic coatings of the invention, it is a further embodiment that said coating may be crosslinked. The crosslinking agent will preferably be reactive with the available hydroxyl groups along the backbone of the partially hydrolyzed cellulose ester present in the coating composition. In one embodiment, the crosslinking agent for the water-insoluble hydrophilic coating is selected from one or more of melamine-formaldehyde resins, urea-formaldehyde resins, benzoguanamine-formaldehyde resins, glycouril-formaldehyde resins, and polyisocyanates. Examples of suitable crosslinking agents include, but are not limited to, hexamethoxymethylmelamine (Cymel 303, Cytec Industries), butylated melamine-formaldehyde resin (Cymel 1156, Cytec Industries) methylated/butylated melamine formaldehyde resin (Cymel 324, Cytec Industries), methylated urea-formaldehyde resin (Cymel U-60), n-butoxymethyl methylol urea (Cymel U-610, Cytec Industries), methoxymethyl ethoxymethyl benzoguanamine-formaldehyde resin (Cymel 1123, Cytec Industries), butylated glycouril-formaldehyde resin (Cymel 1170, Cytec Industries), toluene diisocyanate, diphenylmethane diisocyanate, diisodecyl diisocyanate, hexamethylene diisocyanate (including biurets and trimers), or isophorone diisocyanate.

In a further embodiment, the coating composition of the present invention may optionally contain at least one auxiliary coating resin. Said auxiliary coating resin would be present in order to impart characteristics such as flexibility, impact resistance, or chemical resistance to the water-insoluble hydrophilic coating of the invention. The auxiliary coating resin is selected from one or more of polyesters, polyamides, polyurethanes, polyethers, polyether polyols, or polyacrylics. As most auxiliary coating resins are relatively hydrophobic when compared to the cellulose esters of the water-insoluble hydrophilic coating, it is necessary to minimize the amount of auxiliary coating resin present in the coating formulation in order to ensure that the final coating is sufficiently hydrophilic to provide for the effective release of fouling organisms. Consequently, in one embodiment the auxiliary coating resin may comprise less than 30% by weight based on the total weight of the composition. For example, in one embodiment the auxiliary coating resin may comprise less than 15% by weight based on the total weight of the composition.

As a further aspect of the present invention, the inventive coating compositions may further comprise one or more coatings additives. Such additives are generally present in a range of 0.1% to 15% by weight based on the total weight of the composition. Examples of such coating additives include, but are not limited to, one or more of leveling, rheology, and flow control agents such as silicones or fluorocarbons; extenders; flatting agents; pigment wetting and dispersing agents and surfactants; ultraviolet (UV) absorbers; UV light stabilizers; tinting pigments; colorants; defoaming and antifoaming agents; anti-settling, anti-sag and bodying agents; anti-skinning agents; anti-flooding and anti-floating agents; corrosion inhibitors; or thickening agents.

Specific examples of such additives can be found in Raw Materials Index, published by the National Paint & Coatings Association, 1500 Rhode Island Avenue, N.W., Washington, D.C. 20005.

Examples of flatting agents include synthetic silica, available from the Davison Chemical Division of W. R. Grace & Company under the trademark SYLOID^{®}; polypropylene, available from Hercules Inc., under the trademark HERCOFLAT^{®}; synthetic silicate, available from J. M Huber Corporation under the trademark ZEOLEX^{®}.

Examples of dispersing agents and surfactants include sodium bis(tridecyl) sulfosuccinnate, di(2-ethyl hexyl) sodium sulfosuccinnate, sodium dihexylsulfosuccinnate, sodium dicyclohexyl sulfosuccinnate, diamyl sodium sulfosuccinnate, sodium diisobutyl sulfosuccinate, disodium iso-decyl sulfosuccinnate, and the like.

Examples of viscosity, suspension, and flow control agents include polyaminoamide phosphate, high molecular weight carboxylic acid salts of polyamine amides, and alkyl amine salt of an unsaturated fatty acid, all available from BYK Chemie U.S.A. under the trademark ANTI TERRA^{®}. Further examples include polysiloxane copolymers, hydroxyethyl cellulose, hydrophobically-modified hydroxyethyl cellulose, hydroxypropyl cellulose, polyamide wax, polyolefin wax, or polyethylene oxide.

Several proprietary antifoaming agents are commercially available, for example, under the trademark BRUBREAK of Buckman Laboratories Inc., under the BYK^{®} trademark of BYK Chemie, U.S.A., under the FOAMASTER^{®} and NOPCO^{®} trademarks of Henkel Corp./Coating Chemicals, under the DREWPLUS^{®} trademark of the Drew Industrial Division of Ashland Chemical Company, under the TROYSOL^{®} and TROYKYD^{®} trademarks of Troy Chemical Corporation, and under the SAG^{®} trademark of Union Carbide Corporation.

In one embodiment, the coating composition of the invention further comprises at least one UV absorber or at least one UV light stabilizer and is applied as a clearcoat to a marine substrate.

Examples of U.V. absorbers and U.V. light stabilizers include substituted benzophenone, substituted benzotriazole, hindered amine, and hindered benzoate, available from American Cyanamide Company under the tradename Cyasorb UV, and available from Ciba Geigy under the trademark TINUVIN, and diethyl-3-acetyl-4-hydroxy-benzyl-phosphonate, 4-dodecyloxy-2-hydroxy benzophenone, or resorcinol monobenzoate.

Pigments suitable for use in the coating compositions envisioned by the present invention are the typical organic and inorganic pigments, well-known to one of ordinary skill in the art of surface coatings, especially those set forth by the Colour Index, 3d Ed., 2d Rev., 1982, published by the Society of Dyers and Colourists in association with the American Association of Textile Chemists and Colorists. Examples include, but are not limited to the following: CI Pigment White 6 (titanium dioxide); CI Pigment Red 101 (red iron oxide); CI Pigment Yellow 42, CI Pigment Blue 15, 15:1, 15:2, 15:3, 15:4 (copper phthalocyanines); CI Pigment Red 49:1; or CI Pigment Red 57:1.

The coating composition of the invention may be applied to any substrate which is to be subjected to a marine environment. To prepare the coated substrates of the present invention, the formulated coating composition containing cellulose esters may be applied to a substrate and may either be allowed to air dry or baked. The substrate can be, for example, wood; plastic; metal such as aluminum or steel; glass; or fiberglass.

In one embodiment, the substrate to be coated is selected from a group consisting of metal, plastic, or fiberglass. In another embodiment, the coating composition of the invention is applied to a previously coated substrate. In this embodiment, suitably the coatings previously applied to the substrate may consist of a primer which has been applied directly to the adequately prepared substrate and a basecoat or tiecoat which has been applied to the primer. The application of the coating composition may be accomplished using methods typical for the application of such coatings such as, for example, spraying, rolling, brushing, or dipping.

The following terms have the indicated meanings, in the absence of contrary language elsewhere in this disclosure:
"Solvent" means an organic solvent.
"Organic solvent" means a liquid which includes but is not limited to carbon and hydrogen, wherein the liquid has a boiling point in the range of not more than 280°C at one atmosphere pressure.
"Dissolved" in respect to a polymeric vehicle, formulated coating composition or components thereof means that the material which is dissolved does not exist in a liquid in particulate form where particles larger than single molecules are detectable by light scattering.
"Soluble" means a liquid or solid that can be partially or fully dissolved in a liquid.
"Miscible" means liquids with mutual solubility.

In order to determine the potential effectiveness of the water-insoluble hydrophilic cellulose esters as foul release coatings of the present invention, it is necessary to provide a measurement of the hydrophilicity of the coating as it is exposed to an aqueous environment. This is accomplished by using the underwater octane contact angle method of Hamilton (J. Colloid Inteface. Sci. 1972, 40, 219-222). A coated substrate is immersed in water with the coated side facing downward and allowed to equilibrate for at least 48 hours. A drop of octane is then released from beneath the solid surface. With a lower density than water, the octane floats upward to the coated surface to form an interface. The contact angle of the octane drop on the coating surface is then measured. A higher contact angle indicates a coating composition which is more hydrophilic i.e. interacts more with water than with octane. Without being bound by any theory, the more hydrophilic the composition, the less likely the water at the surface of the coating will be preferentially displaced by a biofouling adhesive. It is an embodiment of the invention that the cellulose ester-based water-insoluble hydrophilic coating exhibit an underwater octane contact angle of greater than 80 degrees. It is a further embodiment of the invention that said coating exhibit an underwater octane contact angle of greater than 100 degrees.

### Reference Examples 1-5

### Example 1

A coating composition was prepared by dissolving 14.8 grams of cellulose diacetate (Eastman CA 398-3 from Eastman Chemical Company) with a solvent mixture consisting of diacetone alcohol (62.3 grams), ethyl alcohol (10.5 grams), and acetone (11.6 grams). After complete dissolution of the cellulose diacetate, 0.8 grams of plasticizer (Cambridge Industries Resoflex R296) was added to the solution.

### Example 2

A coating composition was prepared by dissolving 14.8 grams of cellulose diacetate (Eastman CA 398-6 from Eastman Chemical Company) with a solvent mixture consisting of diacetone alcohol (62.3 grams), ethyl alcohol (10.5 grams), and acetone (11.6 grams). After complete dissolution of the cellulose diacetate, 0.8 grams of plasticizer (Cambridge Industries Resoflex R296) was added to the solution.

### Example 3

A coating composition was prepared by dissolving 14.8 grams of cellulose acetate butyrate (Eastman CAB 551-0.2 from Eastman Chemical Company) with a solvent mixture consisting of diacetone alcohol (62.3 grams), ethyl alcohol (10.5 grams), and acetone (11.6 grams). After complete dissolution of the cellulose diacetate, 0.8 grams of plasticizer (Cambridge Industries Resoflex R296) was added to the solution.

### Example 4

The coating compositions of Examples 1-3 were cast in an open mold and allowed to dry at ambient temperatures. For each of the cellulose ester films and a gel-coated fiberglass control, an octane/water/coating contact angle was determined using the previously described method of Hamilton and is reported in Table 1.

**Table 1.**

| Coating Example | Octane Contact Angle |
|---|---|
| 1 | 118 |
| 2 | 120 |
| 3 | 105 |

These data suggest that the cellulose ester coatings are sufficiently hydrophilic so as to retard the adhesion of biofouling organisms to the substrate surface.

### Example 5

The cellulose ester films as described in Example 4 were mechanically adhered to an aluminum backer plate and placed in the Intercoastal Waterway at the Tide's Marina in Wilmington, NC. A gel-coated fiberglass panel was included as a control. These panels remained submerged and undisturbed for at least six months prior to evaluation. The panels were evaluated for the ease of removal of attached barnacles by two methods: 1) slight sideways finger pressure applied to the barnacle, and 2) a moderate stream of water (such as from a residential water hose) applied to the coated panel. The gel-coated fiberglass control was heavily encrusted with barnacles which would not be removed by either method. In fact, removal could only be accomplished with damage to the underlying substrate. Both the cellulose diacetate films from Examples 1 and 2 and the cellulose acetate butyrate film of Example 3 had minimal algal and barnacle fouling. The barnacles which had adhered could be easily removed from the substrate with slight finger pressure. The algal growth was easily removed with moderate water pressure. Removal of the barnacles was somewhat easier from the cellulose diacetate films - further suggesting the importance of a hydrophilic surface for the minimization of the attachment force for biofouling organisms.

## Claims

1. A process for inhibiting fouling on an underwater surface comprising applying to the surface a coating composition comprising:
(a) at least one cellulose ester selected from the group consisting of cellulose acetate, cellulose triacetate, cellulose acetate phthalate, cellulose acetate butyrate, cellulose butyrate, cellulose tributyrate, cellulose propionate, cellulose tripropionate, cellulose acetate propionate, carboxymethylcellulose acetate, carboxymethylcellulose acetate propionate, carboxymethylcellulose acetate butyrate, cellulose acetate butyrate succinate, or mixtures thereof, wherein the cellulose ester(s) comprise from 10% to 70% by weight based on the total weight of the composition;
(b) at least one organic solvent selected from the group consisting of alcohols, esters, ketones, glycol ethers, glycol ether esters, or mixtures thereof; and
(c) a crosslinking agent which is reactive with at least one of said cellulose esters
and curing said coating composition to provide a water-insoluble hydrophilic coating that is substantially smooth and non-porous.

2. The process of Claim 1, wherein said water-insoluble hydrophilic coating has an underwater octane contact angle of greater than 80 degrees.

3. The process of Claim 1, wherein at least one of said cellulose ester(s) has been partially hydrolyzed.

4. The process of Claim 1, wherein said solvent comprises at least one primary solvent and at least one secondary solvent.

5. The process of Claim 4, wherein said primary solvent has a boiling point from 130°C to 230°C.

6. The process of Claim 4, wherein the primary solvent is one or more of 2-ethylhexanol, diacetone alcohol, methyl amyl ketone, methyl isoamyl ketone, isobutyl isobutyrate, 2-ethylhexyl acetate, diethylene glycol monobutyl ether, ethylene glycol monobutyl ether, ethylene glycol 2-ethylhexyl ether, diethylene glycol monobutyl ether acetate, ethylene glycol monobutyl ether acetate, or propylene glycol monomethyl ether acetate.

7. The process in Claim 4, wherein said secondary solvent has a boiling point from 60°C to 130°C.

8. The process of Claim 4, wherein in the secondary solvent is one or more of methanol, ethanol, n-propanol, isopropanol, butanol, acetone, methyl ethyl ketone, methyl propyl ketone, methyl isobutyl ketone, methyl acetate, ethyl acetate, n-propyl acetate, isopropyl acetate, n-butyl acetate, t-butyl acetate, n-propyl propionate, or propylene glycol monomethyl ether.

9. The process of Claim 1, wherein said coating composition further comprises a plasticizer.

10. The process of Claim 9, wherein the plasticizer is included in amounts up to 25% by weight based on the total weight of the cellulose ester in the composition.

11. The process of Claim 1, wherein said crosslinking agent is selected from one or more of melamine-formaldehyde resins, urea-formaldehyde resins, benzoguanamine-formaldehyde resins, glycoluril-formaldehyde resins, or polyisocyanates.

12. The process of Claim 1, wherein said coating composition further comprises at least one auxiliary coating resin wherein said auxiliary coating resin is one or more of polyesters, polyamides, polyurethanes, polyethers, polyether polyols, or polyacrylics; and wherein said auxiliary coating resin comprises less than 30% of the total weight of the composition.

13. The process of Claim 1, wherein said coating composition is applied to a substrate selected from a group consisting of wood, metal, plastic, or fiberglass.

14. The process of Claim 1, wherein said substrate has been previously coated.

## Patentansprüche

1. Verfahren zur Verhinderung von Ablagerungen auf einer Unterwasseroberfläche, umfassend Aufbringen auf eine Obertläche einer Beschichtungszusammensetzung, umfassend:
(a) mindestens einen Celluloseester ausgewählt aus der Gruppe, bestehend aus Celluloseacetat, Cellulosetriacetat, Celluloseacetatphthalat, Celluloseacetatbutyrat, Cellulosebutyrat, Cellulosetributyrat, Cellulosepropionat, Cellulosetripropionat, Celluloseacetatpropionat, Carboxymethylcelluloseacetat, Carboxymethylcelluloseacetatpropionat, Carboxymethylcelluloseacetatbutyrat, Celluloseacetatbutyratesuccinat, oder Mischungen davon, wobei die(r) Celluloseester von 10 Gew.-% bis 70 Gew.-% umfassen, bezogen auf das Gesamtgewicht der Zusammensetzung;
(b) mindestens ein organisches Lösungsmittel, ausgewählt aus der Gruppe, bestehend aus Alkoholen, Estern, Ketonen, Glycolethern, Glycoletherestern, oder Mischungen davon; und
(c) ein Vernetzungsmittel, welches mit mindestens einem der genannten Celluloseestern reagiert
und Härten der genannten Beschichtungszusammensetzung, um eine wasserunlösliche hydrophile Beschichtung bereitzustellen, die im Wesentlichen glatt und nicht porös ist.

2. Verfahren nach Anspruch 1, wobei die genannte wasserunlösliche, hydrophile Beschichtung einen Unterwasser-Oktan-Kontaktwinkel von größer als 80 Grad aufweist.

3. Verfahren nach Anspruch 1, wobei mindestens einer der genannten Celluloseester teilweise hydrolisiert ist.

4. Verfahren nach Anspruch 1, wobei das genannte Lösungsmittel mindestens ein primäres Lösungsmittel und mindestens ein sekundäres Lösungsmittel umfasst.

5. Verfahren nach Anspruch 4, wobei das genannte primäre Lösungsmittel einen Siedepunkt von 30°C bis 230°C hat.

6. Verfahren nach Anspruch 4, wobei das primäre Lösungmittel ein oder mehrere von 2-Ethylhexanol, Diacetonealkohol, Methylamylketon, Methylisoamylketon, Isobutylisobutyrat, 2-Ethylhexylacetat, Diethylenglycolmonobutylether, Ethylenglycolmonobutylether, Ethylenglycol 2-ethylhexylether, Diethylenglycolmonobutyletheracetate, Ethylenglycolmonobutyletheracetat, oder Propylenglycolmonomethyletheracetat ist.

7. Verfahren in Anspruch 4, wobei das genannte sekundäre Lösungsmittel einen Siedepunkt von 60°C bis 130°C hat.

8. Verfahren nach Anspruch 4, wobei in dem sekundären Lösungsmittel ein oder mehrere von Methanol, Ethanol, n-Propanol, Isopropanol, Butanol, Aceton, Methylethylketon, Methylpropylketon, Methylisobutylketon, Methylacetat, Ethylacetat, n-Propylacetat, Isopropylacetat, n-Butylacetate, t-Butylacetat, n-Propylpropionat, oder Propylenglycolmonomethylether sind.

9. Verfahren nach Anspruch 1, wobei die genannte Beschichtungszusammensetzung ferner einen Weichmacher umfasst.

10. Verfahren nach Anspruch 1, wobei der Weichmacher in einer Menge von bis zu 25 Gew.-% enthalten ist, bezogen auf das Gesamtgewicht des Celluloseesters in der Zusammensetzung.

11. Verfahren nach Anspruch 1, wobei das genannte Vernetzungsmittel aus einem oder mehreren von Melamin-Formaldehydharzen, Harnstoff-Formaldehydharzen, Benzoguanamin-Formaldehydharzen, Glycoluril-Formaldehydharzen, oder Polyisocyanaten ausgewählt ist.

12. Verfahren nach Anspruch 1, wobei die genannte Beschichtungszusammensetzung ferner mindestens ein Zusatzbeschichtungsharz umfasst, wobei das genannte Zusatzbeschichtungsharz ein oder mehrere von Polyestern, Polyamiden, Polyurethanen, Polyethern, Polyetherpolyolen, oder Polyacrylverbindungen; und wobei das genannte Zusatzbeschichtungsharz weniger als 30% des Gesamtgewichts der Zusammensetzung umfasst.

13. Verfahren nach Anspruch 1, wobei die genannte Beschichtungszusammensetzung auf ein Substrat aufgebracht wird, ausgewählt aus einer Gruppe, bestehend aus Holz, Metall, Kunststoff, oder Glasfaser.

14. Verfahren nach Anspruch 1, wobei das genannte Substrat vorher beschichtet wurde.

## Revendications

1. Procédé destiné à inhiber l'encrassement d'une surface immergée comprenant l'application sur la surface d'une composition de revêtement comprenant :
(a) au moins un ester de cellulose choisi parmi le groupe constitué de l'acétate de cellulose, le triacétate de cellulose, le phtalate d'acétate de cellulose, le butyrate d'acétate de cellulose, le butyrate de cellulose, le tributyrate de cellulose, le propionate de cellulose, le tripropionate de cellulose, le propionate d'acétate de cellulose, l'acétate de carboxyméthylcellulose, le propionate d'acétate de carboxyméthylcellulose, le butyrate d'acétate de carboxyméthylcellulose, le succinate de butyrate d'acétate de cellulose, ou des mélanges de ces derniers, dans lequel le ou les esters de cellulose représentent de 10 % à 70 % en poids sur la base du poids total de la composition ;
(b) au moins un solvant organique choisi parmi le groupe constitué des alcools, des esters, des cétones, les éthers de glycol, les esters d'éthers de glycol, ou des mélanges de ces derniers ; et
(c) un agent de réticulation qui réagit avec au moins un desdits esters de cellulose ;
et le durcissement de ladite composition de revêtement afin de former un revêtement hydrophile insoluble dans l'eau qui est substantiellement lisse et non poreux.

2. Procédé de la revendication 1, dans lequel ledit revêtement hydrophile insoluble dans l'eau présente un angle de contact avec l'octane immergé supérieur à 80 degrés.

3. Procédé de la revendication 1, dans lequel au moins un desdits esters de cellulose a été partiellement hydrolysé.

4. Procédé de la revendication 1, dans lequel ledit solvant comprend au moins un solvant primaire et au moins un solvant secondaire.

5. Procédé de la revendication 4, dans lequel ledit solvant primaire a un point d'ébullition compris entre 130°C et 230°C.

6. Procédé de la revendication 4, dans lequel le solvant primaire est un élément où plus parmi le 2-éthylhexanol, le diacétone-alcool, la méthylamylcétone, la méthylisoamylcétone, l'isobutyrate d'isobutyle, l'acétate de 2-éthylhexyle, l'éther monobutylique de l'éthylène glycol, l'éther 2-éthylhexylique de l'éthylène glycol, l'acétate de l'éther monobutylique du diéthylène glycol, l'acétate de l'éther monobutylique de l'éthylène glycol, ou l'acétate de l'éther mono-méthylique du propylène glycol.

7. Procédé de la revendication 4, dans lequel ledit solvant secondaire a un point d'ébullition compris entre 60°C et 130°C.

8. Procédé de la revendication 4, dans lequel on trouve dans le solvant secondaire un ou plusieurs éléments parmi le méthanol, l'éthanol, le n-propanol, l'isopropanol, le butanol, l'acétone, la méthyléthyl-cétone, la méthylpropylcétone, la méthylisobutylcétone, l'acétate de méthyle, l'acétate d'éthyle, l'acétate de n-propyle, l'acétate d'isopropyle, l'acétate de n-butyle, l'acétate de t-butyle, le propionate de n-propyle, ou l'éther monométhylique du propylène glycol.

9. Procédé de la revendication 1, dans lequel ladite composition de revêtement comprend en outre un plastifiant.

10. Procédé de la revendication 9, dans lequel le plastifiant est inclus dans un quantité allant jusqu'à 25 % en poids sur la base du poids total de l'ester de cellulose dans la composition.

11. Procédé de la revendication 1, dans lequel ledit agent de réticulation est choisi parmi des résines mélamine - formaldéhyde, des résines urée - formaldéhyde, des résines benzoguanamine - formaldéhyde, des résines glycolurile- - formaldéhyde, ou des polyiso-cyanates.

12. Procédé de la revendication 1, dans lequel ladite composition de revêtement comprend en outre au moins une résine de revêtement auxiliaire dans lequel ladite résine de revêtement auxiliaire est au moins un parmi des polyesters, des polyamides, des polyuréthanes, des polyéthers, des polyéther polyols, ou des polyacryliques ; et dans lequel ladite résine de revêtement auxiliaire représente moins de 30 % du poids total de la composition.

13. Procédé de la revendication 1, dans lequel ladite composition de revêtement est appliquée sur un substrat choisi parmi le groupe constitué du bois, du métal, du plastique ou de la fibre de verre.

14. Procédé de la revendication 1, dans lequel ledit substrat a été préalablement enduit.
